# FASCICULE DE BREVET EUROPEEN

(11) **EP 1 042 149 B1**
(45) Date de publication et mention de la délivrance du brevet: **31.07.2002**
(21) Numéro de dépôt: 98962537.1
(22) Date de dépôt: 22.12.1998
(51) Int. Cl.: B60T 13/567

(54) **DISPOSITIF DE FREINAGE ASSISTE A SECURITE PASSIVE**
HILFSKRAFTUNTERSTÜTZTE BREMSVORRICHTUNG MIT PASSIVER SICHERHEIT
POWER ASSISTED BRAKE SYSTEM DEVICE WITH PASSIVE SECURITY

(30) Priorité: 22.12.1997 FR 9716221
(43) Date de publication de la demande: 11.10.2000
(73) Titulaire: Bosch Systemes de Freinage, 93700 Drancy (FR)
(72) Inventeur: VERBO, Ulysse, F-93600 Aulnay-sous-Bois (FR); GRECH, Daniel, F-95500 Le Thillay (FR); LEBOISNE, Cédric, F-75011 Paris (FR)
(74) Mandataire: Hurwic, Aleksander Wiktor
(86) Numéro de dépôt international: FR9802813
(87) Numéro de publication internationale: WO9932340

(56) Documents cités:
- DE-A- 3 203 496
- DE-A- 3 428 868
- DE-A- 4 105 744
- GB-A- 2 230 493

## Description

La présente invention concerne un dispositif de freinage, du type de ceux qui sont utilisés pour fournir au conducteur d'un véhicule une assistance au freinage.

De tels dispositifs de freinage sont généralement composés d'un maître-cylindre et d'un servomoteur pneumatique d'assistance, le servomoteur comprenant notamment une enveloppe rigide, une cloison mobile délimitant au moins une chambre avant et une chambre arrière, de façon étanche, à l'intérieur de l'enveloppe, un clapet à trois voies actionnable par une tige de commande pour admettre sélectivement des pressions différentes dans les chambres avant et arrière et soumettre corrélativement la cloison mobile à une force d'assistance agissant en direction du maître-cylindre et une tige de poussée reliée à la cloison mobile, pour actionner le maître-cylindre, l'enveloppe comprenant une coquille avant solidaire du maître-cylindre et formant paroi pour la chambre avant, et une coquille arrière formant paroi pour la chambre arrière, les coquilles avant et arrière comportant chacune un épaulement radial, la cohésion des coquilles avant et arrière étant assurée par un cerclage coopérant avec les épaulements des coquilles avant et arrière.

Des dispositifs de ce type sont bien connus dans l'art antérieur, tel que représenté par exemple par le document de brevet GB-A-2 136 520. Ils sont habituellement disposés dans le compartiment avant d'un véhicule automobile, contenant généralement le moteur du véhicule, le servomoteur étant fixé par sa paroi arrière sur le tablier de séparation entre ce compartiment avant et l'habitacle, et le maître-cylindre étant fixé sur la paroi avant du servomoteur. La tige de commande du servomoteur traverse une ouverture du tablier et elle est actionnée par une pédale de freinage dans l'habitacle.

Au cours des dernières années, l'accroissement des normes de sécurité a révélé l'utilité de faire évoluer les dispositifs de freinage des véhicules à moteur, et en particulier les servomoteurs, d'une façon telle qu'un choc frontal ou oblique appliqué au véhicule ne puisse pas facilement être transmis à la jambe du conducteur, même lorsque le choc intervient alors que le conducteur appuie de tout son poids sur la pédale de frein.

En effet, lors d'une collision frontale ou oblique du véhicule avec un autre véhicule ou avec un obstacle fixe, la structure et la carrosserie du véhicule sont conçus pour se déformer progressivement pour absorber la plus grande partie possible de l'énergie mise en jeu dans cette collision.

Il est néanmoins fréquent que le moteur, ou la charge transportée dans le compartiment avant du véhicule, recule sous l'effet d'une telle collision et vienne interférer avec le maître-cylindre. Une telle interférence peut résulter en l'application sur le maître-cylindre d'une force dirigée selon son axe, ou d'une force faisant un certain angle avec son axe. Il en résulte cependant dans tous les cas que le maître-cylindre sollicite vers l'arrière, par l'intermédiaire de ses brides de fixation, l'enveloppe du servomoteur vers le tablier du véhicule.

Il s'ensuit donc qu'une collision frontale ou oblique a pour conséquences, du fait de la disposition du dispositif de freinage assisté dans le compartiment avant du véhicule, de faire d'abord reculer le tablier sous l'action de l'enveloppe du servomoteur, que le servomoteur soit équipé de tirants ou non, et de faire également reculer la pédale de frein, pouvant occasionner des blessures importantes au conducteur du véhicule. L'aménagement interne de ce compartiment, surtout lorsqu'il contient le moteur d'un véhicule, est toujours pratiquement spécifique à ce dernier, de sorte qu'une solution utilisable avec succès sur un véhicule donné pour éviter de faire reculer la pédale de frein peut s'avérer dépourvue de tout effet positif pour un autre véhicule.

L'invention se situe dans ce contexte et a pour but de proposer une nouvelle solution, susceptible de limiter de façon satisfaisante la transmission d'un choc frontal ou oblique dans des configurations où les solutions connues s'avèrent insuffisamment efficaces en prévoyant un dispositif de freinage assisté tel qu'une interférence du moteur ou de la charge transportée dans le compartiment avant du véhicule avec le maître-cylindre ne soit pas transformée en une projection de la pédale de freinage vers le conducteur du véhicule, et ceci sans utiliser d'éléments additionnels qui allongeraient la longueur axiale de l'ensemble de freinage en avant du tablier.

A cette fin, le dispositif de l'invention est essentiellement caractérisé en ce que le cerclage comporte au moins deux cerclages partiels, les cerclages partiels étant solidarisés par au moins un élément de verrouillage susceptible d'être mis hors fonction lorsque le maître-cylindre est soumis à une sollicitation importante résultant d'un choc frontal ou oblique du véhicule.

Grâce à cet arrangement, les coquilles avant et arrière du servomoteur peuvent, en cas de choc, se désolidariser l'une de l'autre sans transmettre d'effort important vers le conducteur, la désolidarisation de ces deux parties assurant même une fonction d'absorption d'énergie cinétique.

Selon un mode de réalisation possible de l'invention, les cerclages partiels comportent chacun à au moins une de leurs extrémités une patte s'étendant radialement vers l'extérieur du servomoteur, les pattes adjacentes de deux cerclages partiels consécutifs étant maintenues l'une contre l'autre par le dispositif de verrouillage.

Par exemple, le dispositif de verrouillage comporte une fourche formée à une extrémité d'une barre rigide dont l'autre extrémité est solidaire de la coquille avant du servomoteur.

Selon une disposition avantageuse, l'extrémité de la barre rigide est solidaire d'une plaque elle-même solidaire de la coquille avant du servomoteur.

Dans ce dernier cas, la plaque peut être intercalée entre la coquille avant du servomoteur et une bride de fixation du maître-cylindre.

On peut également prévoir que l'extrémité d'au moins un des cerclages partiels soit formée avec une patte formant un crochet destiné à coopérer avec une patte du cerclage partiel adjacent et s'étendant radialement vers l'extérieur du servomoteur.

D'autres buts, caractéristiques et avantages de l'invention ressortiront clairement de la description qui en est faite ci-après. à titre indicatif et nullement limitatif, en référence aux dessins annexés, dans lesquels :
- La Figure 1 est une vue latérale en perspective d'un dispositif de freinage conforme à l'invention, dans sa configuration de repos;
- La Figure 2 est une vue latérale en perspective du dispositif de freinage de la Figure 1, dans sa configuration après un choc frontal ou oblique;
- La Figure 3 est une vue en perspective de trois-quarts avant du dispositif de freinage de la Figure 1, dans sa configuration de repos;
- La Figure 4 est une vue en perspective de trois-quarts avant du dispositif de freinage de la Figure 1, dans sa configuration après un choc frontal ou oblique;
- La Figure 5 est une vue par l'avant du dispositif de freinage de la Figure 1, dans sa configuration après un choc frontal ou oblique;
- La Figure 6 est une vue en demi-coupe transversale du dispositif de freinage de la Figure 1;
- La Figure 7 est une vue en coupe transversale à plus grande échelle du détail cerclé en VII sur la Figure 6 montrant le système de fixation;
- La Figure 8 est une vue latérale en perspective d'une variante de réalisation du dispositif de freinage conforme à la présente invention, et
- Les Figures 9 et 10 sont des vues latérales des extrémités du système de fixation représenté sur la Figure 7.

Comme on le voit bien sur les Figures, l'invention concerne un dispositif de freinage assisté composé d'un maître-cylindre M et d'un servomoteur pneumatique d'assistance S.

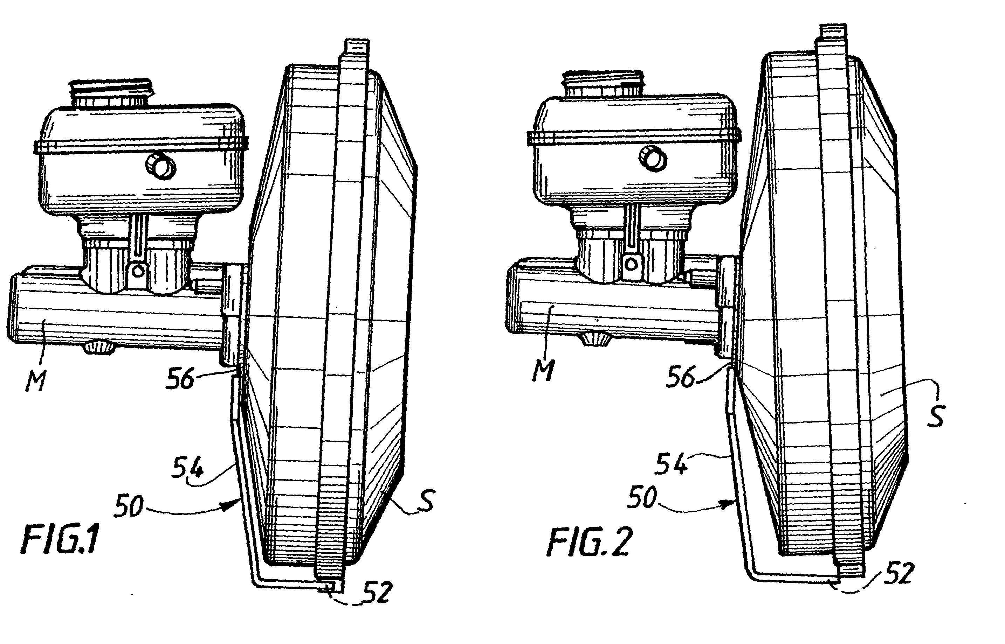

Par convention, on appelle « avant » du dispositif de freinage assisté la partie de ce dernier tournée vers le maître-cylindre M et « arrière » de ce dispositif de freinage la partie tournée vers la pédale de frein. Sur les Figures 1 à 4 et 6 à 8, l'avant est ainsi à gauche et l'arrière à droite.

Le fonctionnement de ces dispositifs de freinage assisté étant bien connu de l'homme de l'art depuis de nombreuses années, la présente description se bornera à rappeler pour mémoire la structure du servomoteur auquel la présente invention est applicable.

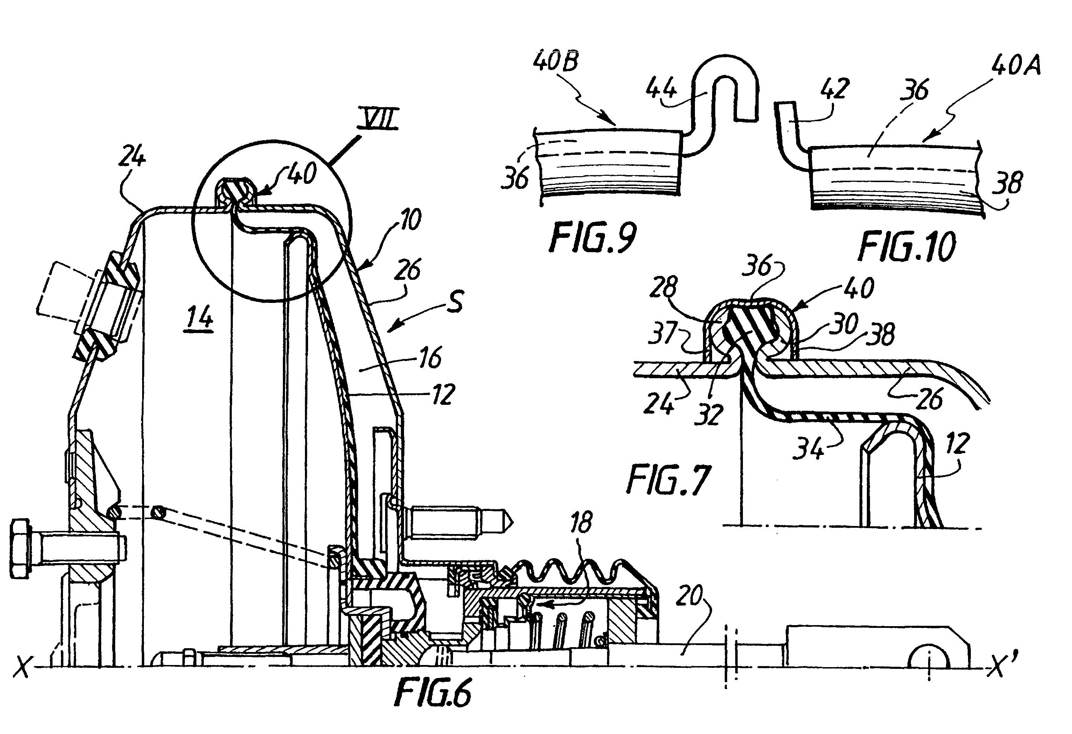

Comme on le voit mieux en particulier sur la Figure 6, le servomoteur S comprend notamment une enveloppe rigide 10, une cloison mobile 12 délimitant, de façon étanche, une chambre avant 14 et une chambre arrière 16, à l'intérieur de l'enveloppe 10, un clapet à trois voies 18 actionnable par une tige de commande 20, pour admettre sélectivement des pressions différentes dans les chambres avant 14 et arrière 16 et pour soumettre corrélativement la cloison mobile 12 à une force d'assistance dirigée vers l'avant, et une tige de poussée 22 reliée à la cloison mobile 12, pour actionner le maître-cylindre M.

L'enveloppe rigide 10 comprend elle-même une coquille avant 24, encore appelée cylindre, solidaire du maître-cylindre M et formant paroi pour la chambre avant 14, et une coquille arrière 26, encore appelée couvercle, formant paroi pour la chambre arrière 16. De façon connue, la coquille avant 24 et la coquille arrière 26 sont formées chacune avec un épaulement radial 28, 30 respectivement, servant à immobiliser un bourrelet périphérique extérieur 32 d'une membrane déroulante souple 34 associée à la cloison mobile 12.

Comme on le voit mieux sur la Figure 7, un cerclage circulaire 40 maintient serrées l'une contre l'autre les coquilles avant 24 et arrière 26, par l'intermédiaire des épaulements 28 et 30 retenant entre eux le bourrelet 32. Le cerclage 40 est formé d'un anneau 36 dont les bords 37 et 38 sont rabattus vers l'intérieur de façon à former des flancs s'étendant dans des plans parallèles entre eux et perpendiculaires à l'axe de symétrie X-X' du servomoteur.

Conformément à la présente invention, le cerclage circulaire 40 est constitué de deux demi-cerclages semi-circulaires 40A et 40B. Les extrémités de chaque demi-cerclage sont conformées de telle façon que l'anneau 36 déborde d'une longueur prédéterminée des flancs 37 et 38. De plus, cette longueur supplémentaire de l'anneau 36 est pliée de façon à s'étendre radialement par rapport au centre de courbure de l'anneau 36, et à former ainsi une patte 42, comme on l'a représenté sur la Figure 10

L'un des demi-cerclages, par exemple le demi-cerclage 40A, est formé avec une patte 42 à chacune de ses extrémités. L'autre demi-cerclage, par exemple le demi-cerclage 40B, est formé avec une patte 42, ainsi qu'on vient de le décrire, à l'une de ses extrémités, tandis que l'autre extrémité est formée avec une patte 44 conformée différemment. La longueur supplémentaire de l'anneau 36 est environ deux fois plus longue que celle qui est nécessaire pour former une patte 42. Cette longueur supplémentaire est pliée, comme la précédente, radialement par rapport au centre de courbure de l'anneau 36, puis elle est repliée sur elle-même, à 180 degrés, de façon à former la deuxième branche d'un crochet, comme on l'a représenté sur la Figure 9, les deux branches étant sensiblement parallèles et ménageant entre elles un espace de largeur légèrement supérieure à l'épaisseur de l'anneau 36.

Lorsque le servomoteur est assemblé, les coquilles avant 24 et arrière 26 sont disposées l'une en face de l'autre de manière à emprisonner le bourrelet annulaire 32 entre leurs épaulements 28 et 30. Les demi-cerclages 40A et 40B peuvent alors être installés sur les épaulements 28 et 30, de telle manière que la patte 44 du demi-cerclage 40B vienne s'accrocher sur la patte 42 du demi-cerclage 40A. Les autres extrémités des demi-cerclages 40A et 40B munies chacune d'une patte 42 peuvent alors être rapprochées l'une de l'autre pour assurer la cohésion du servomoteur.

Les pattes 42 sont alors maintenues en contact au moyen d'un élément de verrouillage 50. Cet élément de verrouillage 50 comporte une fourche 52, enserrant les pattes 42 des demi-cerclages 40A et 40B, et formée à une extrémité recourbée d'une barre rigide 54 dont l'autre extrémité est solidaire d'une plaque 56, maintenue sur la coquille avant 24, en étant par exemple prise en sandwich entre la coquille avant 24 et le maître-cylindre M.

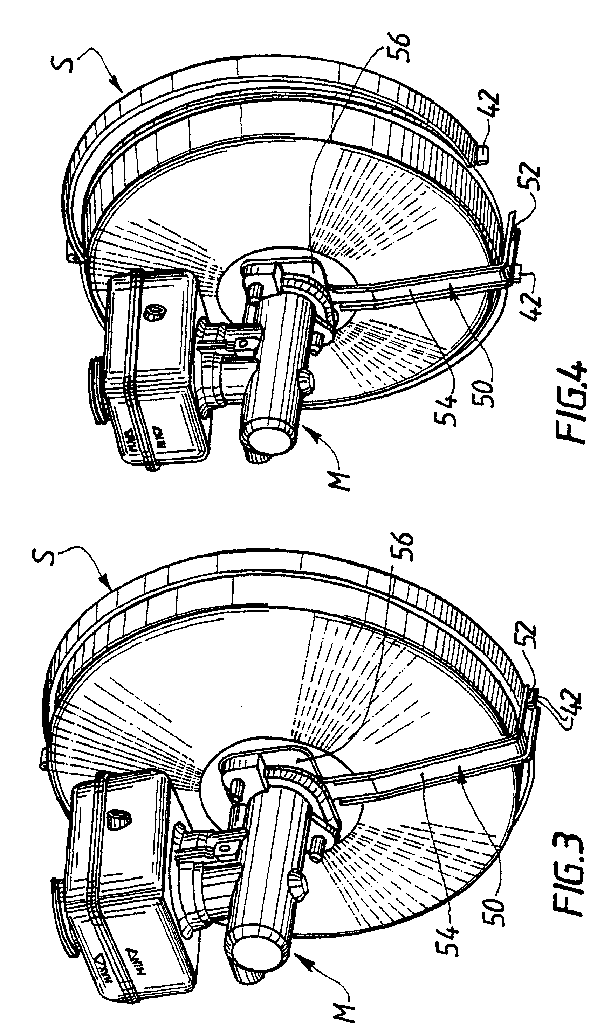

Le dispositif de freinage assisté ainsi assemblé peut alors être installé sur un véhicule, et en particulier en fixant la coquille arrière 26 sur le tablier séparant le compartiment moteur de l'habitacle de ce véhicule. Le dispositif de freinage assisté se retrouve alors dans la configuration représentée sur les Figures 1 et 3. On comprend donc que, dans une telle disposition, qui est la plus couramment utilisée, le servomoteur et le maître-cylindre sont situés dans le prolongement l'un de l'autre, et qu'il en résulte que le maître-cylindre forme une saillie perpendiculaire an tablier et dont l'extrémité avant est située à une distance appréciable du tablier.

On conçoit donc que cette extrémité soit d'autant plus susceptible, lors d'une collision du véhicule, d'être heurtée violemment par une pièce du moteur ou par un élément de la charge transportée dans le compartiment avant.

Un tel choc est alors intégralement répercuté par le corps du maître-cylindre sur l'enveloppe 10 du servomoteur, et par celle-ci sur le tablier, et d'autre part par leurs composants internes sur la tige de commande du servomoteur et finalement sur la pédale de frein.

On aura compris à la lecture de ce qui précède comment la présente invention évite cet inconvénient.

Lors d'une collision frontale ou oblique du véhicule équipé d'un tel dispositif de freinage assisté, la force engendrée par un composant du moteur ou un élément de la charge transportée dans le compartiment avant venant interférer avec le maître-cylindre M aura pour conséquence première d'appliquer un couple de rotation au corps du maître-cylindre M, et de faire tourner celui-ci autour d'un axe de rotation situé sensiblement dans la zone de la bride de fixation du maître-cylindre sur la coquille avant du servomoteur et sur la plaque 56 de l'élément de verrouillage 50.

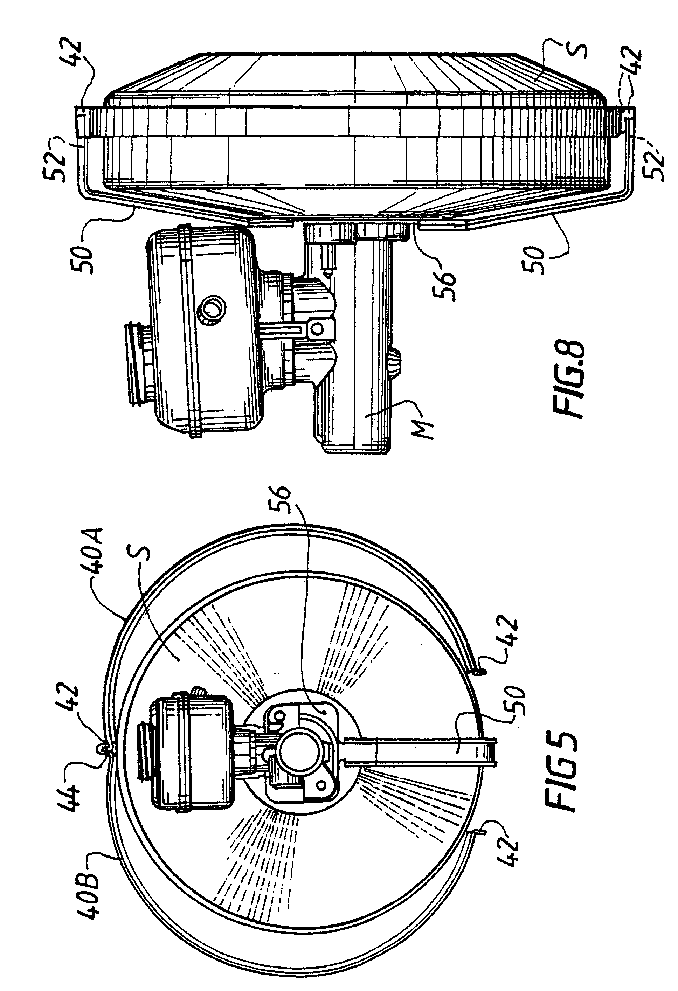

Cette rotation du maître-cylindre par rapport au servomoteur entraîne celle de la plaque 56, qui entraîne à son tour celle de l'élément de verrouillage 50. Dans ce mouvement, la fourche 52 se dégage des pattes 42, de sorte que les extrémités des demi-cerclages 40A et 40B sont désolidarisées l'une de l'autre, comme on l'a représenté sur les Figures 2, 4 et 5, et que les demi-cerclages 40A et 40B ne sont plus retenus l'un à l'autre que par la patte 42 du demi-cerclage 40A maintenue dans la patte 44 du demi-cerclage 40B. Les demi-cerclages 40A et 40B sont libres de tourner autour de cette articulation, et il en résulte que les coquilles avant 24 et arrière 26 du servomoteur sont elles aussi désolidarisées l'une de l'autre.

La rotation du maître-cylindre par rapport à la coquille avant du servomoteur a eu simultanément pour conséquence de rompre l'étanchéité de la chambre avant 14 du servomoteur par rapport à l'atmosphère ambiante. Il en résulte donc que la pression atmosphérique n'exerce plus aucune force pouvant assurer la cohésion du servomoteur. Les coquilles avant 24 et arrière 26 sont donc libres de se détacher l'une de l'autre, et il en résulte qu'elles ne peuvent plus transmettre d'effort important vers le conducteur du véhicule.

On a représenté sur la Figure 8 une variante du mode de réalisation qui vient d'être décrit. Selon cette variante, les deux demi-cerclages assurant la solidarisation des coquilles du servomoteur sont identiques, et comportent tous deux à leurs extrémités des pattes telles que la patte 42 précédemment décrite. Les deux demi-cerclages sont maintenus par deux éléments de verrouillage 50, diamétralement opposés, et solidaires de la même plaque 56. Le comporte ment du dispositif de freinage assisté réalisé selon cette variante de réalisation est identique à celui qui a été décrit plus haut, à ceci près que la rotation du maître-cylindre par rapport au servomoteur pourra intervenir selon deux directions privilégiées pour résulter en la désolidarisation du servomoteur.

On a donc bien réalisé un dispositif de freinage assisté tel qu'une interférence du moteur ou de la charge transportée dans le compartiment avant du véhicule avec le maître-cylindre soit transformée en une désolidarisation du servomoteur, de sorte que ce dernier ne peut plus transmettre un effort résultant d'un choc frontal ou oblique au conducteur du véhicule.

Bien entendu, l'invention n'est pas limitée aux modes de réalisation qui ont été décrits, mais elle est susceptible au contraire de recevoir de nombreuses modifications qui apparaîtront à l'homme du métier. On pourra bien sûr utiliser des cerclages partiels en nombre supérieur à deux, par exemple trois cerclages partiels couvrant chacun un secteur angulaire de 120 degrés, deux cerclages partiels consécutifs étant réunis par un élément de verrouillage solidaire de la plaque intercalée entre le servomoteur et le maître-cylindre.

## Revendications

1. Dispositif de freinage assisté pour véhicule automobile, composé d'un maître-cylindre (M) et d'un servomoteur pneumatique d'assistance (S), le servomoteur (S) comprenant notamment une enveloppe rigide (10), une cloison mobile (12) délimitant au moins une chambre avant (14) et une chambre arrière (16), de façon étanche, à l'intérieur de l'enveloppe (10), un clapet à trois voies (18) actionnable par une tige de commande (20) pour admettre sélectivement des pressions différentes dans les chambres avant (14) et arrière (16) et soumettre corrélativement la cloison mobile (12) à une force d'assistance agissant en direction du maître-cylindre (M) et une tige de poussée (22) reliée à la cloison mobile (12), pour actionner le maître-cylindre (M), l'enveloppe (10) comprenant une coquille avant (24) solidaire du maître-cylindre (M) et formant paroi pour la chambre avant (14), et une coquille arrière (26) formant paroi pour la chambre arrière (16), les coquilles avant (24) et arrière (26) comportant chacune un épaulement radial (28, 30), la cohésion des coquilles avant (24) et arrière (26) étant assurée par un cerclage (40) coopérant avec les épaulements (28, 30) des coquilles avant (24) et arrière (26), **caractérisé en ce que** le cerclage (40) comporte au moins deux cerclages partiels (40A, 40B), les cerclages partiels (40A, 40B) étant solidarisés par au moins un élément de verrouillage (50) susceptible d'être mis hors fonction lorsque le maître-cylindre (M) est soumis à une sollicitation importante résultant d'un choc frontal ou oblique du véhicule.

2. Dispositif de freinage assisté selon la revendication 1, **caractérisé en ce que** les cerclages partiels (40A, 40B) comportent chacun à au moins une de leurs extrémités une patte (42) s'étendant radialement vers l'extérieur du servomoteur (S), les pattes (42) adjacentes de deux cerclages partiels consécutifs (40A, 40B) étant maintenues l'une contre l'autre par le dispositif de verrouillage (50).

3. Dispositif de freinage assisté selon la revendication 2, **caractérisé en ce que** le dispositif de verrouillage (50) comporte une fourche (52) formée à une extrémité d'une barre rigide (54) dont l'autre extrémité est solidaire de la coquille avant (24) du servomoteur (S).

4. Dispositif de freinage assisté selon la revendication 3, **caractérisé en ce que** l'extrémité de la barre rigide (54) est solidaire d'une plaque (56) elle-même solidaire de la coquille avant (24) du servomoteur (S).

5. Dispositif de freinage assisté selon la revendication 4, **caractérisé en ce que** la plaque (56) est intercalée entre la coquille avant (24) du servomoteur (S) et une bride de fixation du maître-cylindre (M).

6. Dispositif de freinage assisté selon la revendication 1, **caractérisé en ce que** l'extrémité d'au moins un des cerclages partiels (40B) est formée avec une patte (44) formant un crochet destiné à coopérer avec une patte (42) du cerclage partiel adjacent (40A) et s'étendant radialement vers l'extérieur du servomoteur (S).

## Patentansprüche

1. Vorrichtung zum unterstützten Bremsen bei Kraftfahrzeugen, die aus einem Hauptzylinder (M) und einem pneumatischen Unterstützungs-Servomotor (S) besteht, wobei der Servomotor (S) insbesondere ein starres Gehäuse (10) und eine bewegliche Trennwand (12) enthält, die im Inneren des Gehäuses (10) in dichter Weise wenigstens eine vordere Kammer (14) und eine hintere Kammer (16) abgrenzt, sowie ein Dreiwege-Ventil (18), das durch eine Steuerstange (20) betätigbar ist, um selektiv in die vordere Kammer (14) und die hintere Kammer (16) unterschiedliche Drücke einzulassen und dementsprechend die bewegliche Trennwand (12) einer Unterstützungskraft auszusetzen, die in Richtung des Hauptzylinders (M) wirkt, und eine Schubstange (22), die mit der beweglichen Trennwand (12) verbunden ist, um den Hauptzylinder (M) zu betätigen, wobei das Gehäuse (10) eine vordere Schale (24) aufweist, die fest mit dem Hauptzylinder (M) verbunden ist und eine Wand für die vordere Kammer (14) bildet, sowie eine hintere Schale (26), die eine Wand für die hintere Kammer (16) bildet, wobei die vordere Schale (24) und die hintere Schale (26) jeweils eine radiale Schulter (28, 30) aufweisen, wobei die Verbindung zwischen der vorderen Schale (24) und der hinteren Schale (26) durch einen Reif (40) gewährleistet ist, der mit den Schultern (28, 30) der vorderen Schale (24) und der hinteren Schale (26) zusammenwirkt, **dadurch gekennzeichnet, daß** der Reif (40) wenigstens zwei Teil-Reife (40A, 40B) aufweist, wobei die Teil-Reife (40A, 40B) durch wenigstens ein Verriegelungselement (50) miteinander verbunden sind, das außer Funktion gesetzt werden kann, wenn der Hauptzylinder (M) einer starken Beanspruchung ausgesetzt ist, die aus einem frontalen oder schrägen Stoß des Fahrzeugs resultiert.

2. Vorrichtung zum unterstützten Bremsen nach Anspruch 1, **dadurch gekennzeichnet, daß** die Teil-Reife (40A, 40B) jeweils wenigstens an einem ihrer Enden eine Lasche (42) aufweisen, die sich radial zum Äußeren des Servomotors (S) erstreckt, wobei die benachbarten Laschen (42) von zwei aufeinanderfolgenden Teil-Reifen (40A, 40B) aneinander von der Verriegelungsvorrichtung (50) gehalten werden.

3. Vorrichtung zum unterstützten Bremsen nach Anspruch 2, **dadurch gekennzeichnet, daß** die Verriegelungsvorrichtung (50) eine Gabel (52) aufweist, die an einem Ende einer starren Stange (54) gebildet ist, deren anderes Ende fest mit der vorderen Schale (24) des Servomotors (S) verbunden ist.

4. Vorrichtung zum unterstützten Bremsen nach Anspruch 3, **dadurch gekennzeichnet, daß** das Ende der starren Stange (54) fest mit einer Platte (56) verbunden ist, die wiederum fest mit der vorderen Schale (24) des Servomotors (S) verbunden ist.

5. Vorrichtung zum unterstützten Bremsen nach Anspruch 4, **dadurch gekennzeichnet, daß** die Platte (56) zwischen der vorderen Schale (24) des Servomotors (S) und einem Befestigungsflansch des Hauptzylinders (M) eingespannt ist.

6. Vorrichtung zum unterstützten Bremsen nach Anspruch 1, **dadurch gekennzeichnet, daß** das Ende von wenigstens einem der Teil-Reife (40B) mit einer Lasche (44) ausgebildet ist, die einen Haken bildet, der dafür vorgesehen ist, mit einer Lasche (42) des angrenzenden Teil-Reifs (40A) zusammenzuwirken und sich radial zum Äußeren des Servomotors (S) erstreckt.

## Claims

1. Boosted braking device for motor vehicles, composed of a master cylinder (M) and of a pneumatic booster (S), the booster (S) comprising, in particular, a rigid casing (10), a mobile partition (12) delimiting at least a front chamber (14) and a rear chamber (16), in sealed fashion, inside the casing (10), a three-way valve (18) that can be actuated by a control rod (20) in order, selectively, to let different pressures into the front chamber (14) and the rear chamber (16) and correspondingly subject the mobile partition (12) to a boost force acting in the direction of the master cylinder (M), and a push rod (22) connected to the mobile partition (12) for operating the master cylinder (M), the casing (10) comprising a front shell (24) secured to the master cylinder (M) and forming a wall for the front chamber (14), and a rear shell (26) forming a wall for the rear chamber (16), the front shell (24) and rear shell (26) each comprising a radial shoulder (28, 30), cohesion between the front shell (24) and the rear shell (26) being ensured by hooping (40) interacting with the shoulders (28, 30) of the front shell (24) and rear shell (26), **characterized in that** the hooping (40) comprises at least two part hoops (40A, 40B), the part hoops (40A, 40B) being joined together by at least one locking element (50) capable of being rendered non-functional when the master cylinder (M) is subjected to substantial stress as a result of a frontal or oblique impact of the vehicle.

2. Boosted braking device according to Claim 1, **characterized in that** the part hoops (40A, 40B) each comprise, at least at one of their ends, a tab (42) extending radially towards the outside of the booster (S), the adjacent tabs (42) of two consecutive part hoops (40A, 40B) being held against one another by the locking device (50).

3. Boosted braking device according to Claim 2, **characterized in that** the locking device (50) comprises a fork (52) formed at one end of a rigid bar (54), the other end of which is secured to the front shell (24) of the booster (S).

4. Boosted braking device according to Claim 3, **characterized in that** the end of the rigid bar (54) is secured to a plate (56) itself secured to the front shell (24) of the booster (S).

5. Boosted braking device according to Claim 4, **characterized in that** the plate (56) is inserted between the front shell (24) of the booster (S) and a fixing flange of the master cylinder (M).

6. Boosted braking device according to Claim 1, **characterized in that** the end of at least one of the part hoops (40B) is formed with a tab (44) forming a hook intended to interact with a tab (42) of the adjacent part hoop (40A) and extending radially towards the outside of the booster (S).
